# EUROPÄISCHE PATENTANMELDUNG

(11) **EP 3 528 524 A1**
(43) Veröffentlichungstag der Anmeldung: **21.08.2019**
(21) Anmeldenummer: 18157606.7
(22) Anmeldetag: 20.02.2018
(51) Int. Cl.: H04W 12/12, G07C 3/00, G07C 5/00

(54) **STEUEREINHEIT UND VERFAHREN ZUM MANIPULATIONSGESCHÜTZTES ERFASSEN VON BETRIEBSSICHERHEITSRELEVANTEN INTEGRITÄTSÜBERWACHUNGSDATEN**

(71) Anmelder: Siemens Aktiengesellschaft, 80333 München (DE)
(72) Erfinder: Falk, Dr. Rainer, 85586 Poing (DE)

(57) **Zusammenfassung**

Die Erfindung beansprucht eine Steuereinheit (ER), die mindestens einen Prozessor (P) umfasst, der eingerichtet ist, um die folgenden Schritte auszuführen:
- Manipulationsgeschütztes Erfassen von betriebssicherheitsrelevanten Integritätsüberwachungsdaten eines mit einer betriebssicherheitskritischen Funktion ausgestatteten Systems (ID1 bis ID5), das per Funkübertragung (5G) an ein Kommunikationsnetzwerk angebunden ist oder angebunden werden kann, wobei die Integritätsüberwachungsdaten eine Integritätsüberwachung des Systems und/oder Fremdzugriffe auf die Funkübertragung beschreiben, und
- manipulationsgeschütztes Aufzeichnen und/oder Speichern der Integritätsüberwachungsdaten zur Auswertung derselben im Falle eines Einsatz der betriebssicherheitsrelevanten Funktion.

## Beschreibung

Die Erfindung betrifft Steuereinheit und Verfahren zum manipulationsgeschütztes Erfassen von betriebssicherheitsrelevanten Integritätsüberwachungsdaten.

Es besteht ein Bedarf, um mit IT-Security-Mechanismen Produkte, beispielsweise Geräte (z.B. Steuergeräte, Internet-der-Dinge (IoT)-Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen der Energietechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen sichergestellt.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten zu übertragen können die genannten Geräte mit einer Datenschnittstelle ausgestattet sein, die drahtgebunden als auch als Drahtlos-Schnittstelle, z.B. eine WLAN-, eine Bluetooth- oder eine NFC-Schnittstelle (NFC: Near Field Communication) ausgebildet und eingerichtet sein. Mit Hilfe dieser Datenschnittstelle kann das Gerät an ein Netzwerk angebunden werden bzw. mit anderen Geräten kommunizieren.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication für autonome Fahrzeuge bzw. autonomes Fahren, funkbasierte Zugsicherung ETCS). Auch kann funkbasiert eine Positionsinformationen (PVT: position, velocity, time) über ein Satellitennavigationssystem (GPS, Galileo, Beidou, Glonass) empfangen werden, die für eine Steuerungsfunktion des Geräts verwendet wird.

Es besteht ein Bedarf an einer verlässlichen Kommunikation bei einer drahtlosen Übertragung von Steuerdaten und von Zusatzdaten, die für eine Steuerung verwendet werden. Dabei muss davon ausgegangen werden, dass die Funkübertragung temporär gestört oder unterbrochen sein kann.

Es ist möglich, sogenannte Blackbox Recorder bzw. Juridical Recorder in Safety-kritischen bzw. betriebssicherheitskritischen Systemen (d.h. Sicherung der Funktionalität von Zügen, Flugzeugen, Schienenfahrzeugen etc.) zu verwenden, um Steuerdaten im laufenden Betrieb zu erfassen und manipulationsgeschützt zu speichern. Dadurch kann nach einem Unfall der Unfallhergang aufgeklärt werden. Diese werden auch als Train Event Recorder, Flight Data Recorder oder allgemein Event Data Recorder bezeichnet. In Flugzeugen ist es möglich, die Kommunikation im Cockpit aufzuzeichnen (Cockpit Voice Recorder).

Unter anderem kann eine fehlerhafte Übertragung zu einem Radio Block Center (RBC) aufgezeichnet werden. Dabei kann z.B. ein Fehler in der Nachrichtensequenzfolge, inkonsistente Nachrichten oder auch ein Radio Link Error erfasst werden. Dies bezieht sich vorwiegend auf die Prüfung von Zeitstempeln und die korrekte Formatierung von Nachrichten.

Weiterhin ist es möglich, die Datenkommunikation in einem Netzwerk aufzuzeichnen (packet capturing). Es können sogenannte Intrusion Detection Systeme (W)IDS eingesetzt werden, um Angriffe auf ein (Funk-)Netzwerk zu erkennen.

In der Funktechnik ist es möglich, ein Empfangssignal zu digitalisieren und einen Ausschnitt des Empfangssignals als sogenannten Radio Snippet oder Snapshot auszuwerten.

Es sind Methoden bekannt, die Integrität von Geräten zu überprüfen. Beispielsweise ist in EP 17180526.0 schon eine Integritätsüberwachung bei Automatisierungssystem vorgeschlagen worden, bei dem überprüft wird, ob die Integrität der Produktionsmaschinen während der Herstellung eines Produkts erfüllt war. Zudem ist beispielsweise in EP 17188718.5 schon ein Verfahren zur kryptographisch geschützten Überwachung wenigstens einer Komponente eines Geräts oder einer Anlage vorschlagen worden, wobei eine Blockchain-basierte kryptographische Überwachungsfunktion, insbesondere ein Watchdog (für Geräte, Container, virtuelle Maschinen) bereitgestellt wird.

Es ist Aufgabe der vorliegenden Erfindung, Verfahren und Vor- bzw. Einrichtungen mit gegenüber dem oben genannten Stand der Technik insbesondere im Umfeld von Safety-kritischen Funktionen zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Steuereinheit, die mindestens einen Prozessor umfasst, der eingerichtet ist, um die folgenden Schritte auszuführen:
- Manipulationsgeschütztes Erfassen von betriebssicherheitsrelevanten Integritätsüberwachungsdaten eines mit einer betriebssicherheitskritischen Funktion ausgestatteten Systems, das per Funkübertragung an ein Kommunikationsnetzwerk angebunden ist oder angebunden werden kann, wobei die Integritätsüberwachungsdaten eine Integritätsüberwachung des Systems und/oder Fremdzugriffe auf die Funkübertragung beschreiben, und
- manipulationsgeschütztes Aufzeichnen und/oder Speichern der Integritätsüberwachungsdaten zur Auswertung derselben im Falle eines Einsatz der betriebssicherheitsrelevanten Funktion.

Ein mit einer betriebssicherheitskritischen Funktion ausgestatteten Systems kann ein Gerät, Automatisierungssystem/- anlage, Fahrzeug etc. sein. Die Integritätsüberwachung erfolgt vorzugsweise zur Laufzeit des Systems.
Das Aufzeichnen kann auch ein Protokollieren in eine sogenannte Logdatei umfassen.

Die betriebssicherheitsrelevante Funktion kann eine Unfallmeldung bzw. ein Aussenden eines Notfall-/Alarm-/Warnsignals/-nachricht sein. Betriebssicherheitskritische Funktionen werden, insbesondere bei autonomen Fahren und Cloud Robotics, auf IT-basierten Systemen und unter Nutzung von Funkübertragung (z.B. 5G Cloud Robotics) realisiert. Dabei ist es möglich, dass eine absichtliche Manipulation eines Gerätes oder der Funkübertragung bei einem Unfall vorlag und den Unfall verursacht oder beeinflusst hat.
Um im Falle eines Unfalls aufklären zu können, ob eine gestörte oder manipulierte Funkübertragung oder eine Gerätemanipulation zum Unfall ursächlich geführt hat oder indirekt beteiligt war, wird eine entsprechende Information benötigt, die manipulationsgeschützt vorliegt.

Eine Weiterbildung der Erfindung sieht vor, dass der Prozessor desweiteren dazu eingerichtet ist, die aufgezeichneten und/oder gespeicherten Integritätsüberwachungsdaten auszugeben, um eine Auswertung derselben basierend auf einer erhaltenen Alarm- und/oder Warninformation einzuleiten, welche aufgrund einer Ausführung der sicherheitskritischen Funktion ausgesendet worden ist.

Integritätsüberwachungsdaten können während des Betriebs des Systems aufgezeichnet und/oder gespeichert werden. Die Integritätsüberwachungsdaten können zudem Systemsteuerungsbefehle umfassen.

Eine Weiterbildung der Erfindung sieht vor, dass die Integritätsüberwachungsdaten zudem zumindest eine Eigenschaft des Funksignals der Funkübertragung und/oder einen digitalisierten Ausschnitt (Snippet oder Snapshot) des Funksignals beschreiben.

Eine Weiterbildung der Erfindung sieht vor, dass das Aufzeichnen und/oder Speichern der Integritätsüberwachungsdaten mittels einer kryptographischen Prüfsumme manipulationsgeschützt ist oder wird.

Eine Weiterbildung der Erfindung sieht vor, dass das Aufzeichnen und/oder Speichern der Integritätsüberwachungsdaten mittels einer Attestierung (Zeitstempel, Zählerwert) manipulationsgeschützbar ist oder manipulationsgeschützt ist.

Eine Weiterbildung der Erfindung sieht vor, dass die Steuereinheit als im System lokal angeordnete Applikation, als außerhalb des Systems angeordnete Cloud- und/oder Serverdienst ausgestaltet ist.

Eine Weiterbildung der Erfindung sieht vor, dass zum manipulationsgeschützten Aufzeichnen und/oder Speichern der Integritätsüberwachungsdaten diese in eine kryptographisch gesicherte Log-Datei geschrieben oder schreibbar sind.

Eine Weiterbildung der Erfindung sieht vor, dass zum manipulationsgeschützten Erfassen der Integritätsüberwachungsdaten diese als Transaktion in eine Blockchain-Datenstruktur eingestellt sind.

Unter einer Blockkette bzw. Blockchain wird im allgemeinen eine Datenbank verstanden, deren Integrität (Sicherung gegen nachträgliche Manipulation) durch Speicherung des Einwegfunktionswertes, auch Hashwert genannt, des vorangehenden Datensatzes bzw. Blocks bzw. Glieds im jeweils nachfolgenden, also durch kryptographische Verkettung, gesichert ist. Ein in der Blockchain geschützter Transaktionsdatensatz umfasst im allgemeinen Programmcode, in dem zum Erstellungszeitpunkt Bedingungen definiert und zu seiner Laufzeit ausgewertet werden können, so dass bestimmte Transaktionen in einer bestimmten (Geldbetrags-)Höhe an einen bestimmten oder mehrere bestimmte Empfänger durchgeführt werden können oder nicht. Mit Hilfe des Transaktionsdatensatzes kann die Transaktion ausgeführt werden.

Ein weiterer Aspekt der Erfindung ist ein Verfahren umfassend folgende Schritte:
- Manipulationsgeschütztes Erfassen von betriebssicherheitsrelevanten Integritätsüberwachungsdaten eines mit einer betriebssicherheitskritischen Funktion ausgestatteten Systems, das per Funkübertragung an ein Kommunikationsnetzwerk angebunden wird, wobei die Integritätsüberwachungsdaten eine Integritätsüberwachung des Systems und/oder Fremdzugriffe auf die Funkübertragung beschreiben, und
- manipulationsgeschütztes Aufzeichnen (Protokollieren) und/oder Speichern der Integritätsüberwachungsdaten zur Auswertung derselben im Falle eines Einsatz der betriebssicherheitsrelevanten Funktion.

Des Weiteren wird ein Computerprogramm(produkt) umfassend Programm-Code, der von mindestens einem Prozessor ausgeführt werden kann und der bewirkt, dass der mindestens eine Prozessor das erfindungsgemäße Verfahren und dessen Ausführungsformen ausführt. Das Computerprogramm kann auf einer Einrichtung der vorstehend genannten Art ablaufen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Das Verfahren und Computerprogramm(produkte) können entsprechend der Weiterbildungen/Ausführungsformen der vorgenannten Einrichtung und deren Weiterbildungen/Ausführungsformen ausgebildet sein.

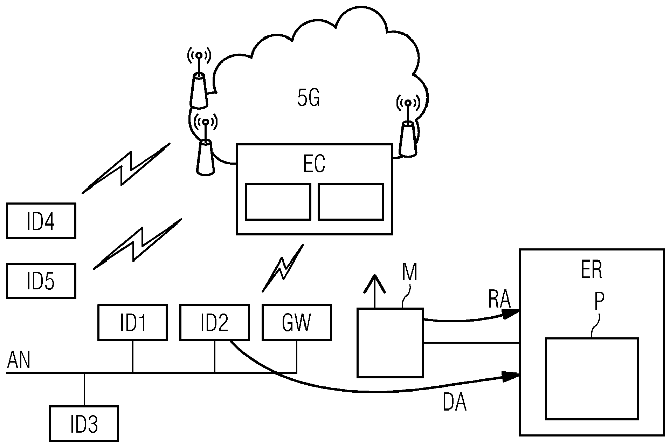

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die Figur zeigt schematisch eine Umgebung, in der ein betriebssicherheitskritisches System eingesetzt wird. Ein mit einer betriebssicherheitskritischen Funktion ausgestattetes System kann ein Gerät, Automatisierungssystem/-anlage, Fahrzeug etc. sein. Betriebssicherheitskritische Funktionen werden, insbesondere bei autonomen Fahren und Cloud Robotics, auf IT-basierten Systemen und unter Nutzung von Funkübertragung (z.B. 5G Cloud Robotics) realisiert.

Für eine verlässliche Funkübertragung im weiteren Sinn gehören nicht nur Verfahren, die robust unter Störungen sind und bei denen QoS(Quality of Service)-Parameter versucht werden einzuhalten. Es gehört auch dazu, Störungen zu erkennen und darauf reagieren zu können. Herkömmliche Intrusion Detection Systeme (IDS) und Integrity-Monitoring (Integritätsüberwachung) sind in der Regel nicht ausreichend.

In der Figur ist sind betriebssicherheitsrelevante Geräte ID1 bis ID5 gezeigt. Diese können an ein Automatisierungsnetz AN mit einem Gateway GW angebunden sein. Sie können auch über eine Funkübertragung 5G mit einer Cloud EC verbunden sein. Eine Security Integrity Monitoring Information (Integritätsüberwachungsdaten), welche per Funkübertragung mittels einer Überwachungseinheit bzw. -geräts M erfasst und mit in einem Event Data Recorder ER (Ereignisdatenrekorder) integriert in die erfindungsgemäße Steuereinheit manipulationsgeschützt aufgezeichnet und/oder gespeichert. Dies ermöglich, im Falle eines Unfalls ein manipuliertes Gerät, eine manipulierte Datenübertragung, ein Stören einer Funkübertragung nachzuweisen zu. Die erfasste Security Integrity Information kann folgendes umfassen:
- eine Gerätesicherheitsüberprüfung (Device Security Health Check), d.h. die Überprüfung der Integrität von Programm-code und/oder Konfigurationsdaten zur Laufzeit bzw. während des Betriebs des Gerätes.
- Status Host/Network/Wireless Intrusion Detection System (IDS),
- Radio-/Funkbereich: Information betreffend Signalqualität (Signalstärke, Bitfehlerrate, Kanalschätzung (Channel Estimation), ermittelte "Jamming"-Information, d.h. abgeleitete Information zu Störern, Störerart
- rohe Funk-Snippets (digitalisiertes Basisbandsignal) bzw. ein kontinuierliches digitalisiertes Basisbandsignal.

Diese Information bzw. Daten eines Security-Integrity-Monitorings wird in einem Event Data Recorder manipulationsgeschützt aufgezeichnet, so dass sie im Falle eines Unfalls auswertbar ist. Der Event Data Recorder kann lokal als spezielle Hardware-Appliance, d.h. einer Kombination aus Hardware, ggf. Firmware und Software, realisiert sein und weist einen Prozessor P auf. Er kann jedoch auch als Cloud Dienst in einer Cloud EC, z.B. einer zentralen Cloud oder einer sogenannten Edge Cloud, realisiert sein.

Vorzugsweise werden die Integritätsüberwachungsdaten durch eine kryptographische Prüfsumme geschützt dem Event Data Recorder bereitgestellt. Es kann sich z.B. um eine Attestation handeln (z.B. ein Gerät attestiert, dass sein Device Health Check den Status "OK" liefert). Die Attestierung umfasst vorzugsweise einen Zeitstempel oder einen Zählerwert, sodass die Aktualität verifizierbar ist. Die erfasste Information kann insbesondere ein gesichertes Log oder als Transaktion in eine Blockchain-Datenstruktur bzw. eine Distributed-Ledger-Datenstruktur eingestellt werden.

Erfindungsgemäß werden Geräteintegritätsattestierungen DA und Radio-Integritätsmessdaten RA erfasst und als Teil der Integritätsüberwachungsdaten in einem Event Data Recorder erfasst und/oder aufgezeichnet und/oder gespeichert, um für eine ggf. erforderliche Auswertung zur Verfügung zu stehen. Der Event Data Recorder kann auch als Applikation (App) in einer Edge Cloud realisiert sein. Es sind vielfältige andere Realisierungen denkbar. Z.B. kann statt einer Edge Cloud eine herkömmliche Cloud verwendet werden, oder es kann eine lokale Steuerung und das Aufzeichnen der Integritätsüberwachungsdaten in einem physikalisch oder logisch separierten nicht in der Figur dargestellten Steuerungsnetzwerk erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Steuereinheit (ER), die mindestens einen Prozessor (P) umfasst, der eingerichtet ist, um die folgenden Schritte auszuführen:
- Manipulationsgeschütztes Erfassen von betriebssicherheitsrelevanten Integritätsüberwachungsdaten eines mit einer betriebssicherheitskritischen Funktion ausgestatteten Systems (ID1 bis ID5), das per Funkübertragung (5G) an ein Kommunikationsnetzwerk angebunden ist oder angebunden werden kann, wobei die Integritätsüberwachungsdaten eine Integritätsüberwachung des Systems und/oder Fremdzugriffe auf die Funkübertragung beschreiben, und
- manipulationsgeschütztes Aufzeichnen und/oder Speichern der Integritätsüberwachungsdaten zur Auswertung derselben im Falle eines Einsatz der betriebssicherheitsrelevanten Funktion.

2. Steuereinheit nach dem vorhergehenden Anspruch, **dadurch gekennzeichnet, dass** der Prozessor desweiteren dazu eingerichtet ist, die aufgezeichneten und/oder gespeicherten Integritätsüberwachungsdaten auszugeben, um eine Auswertung derselben basierend auf einer erhaltenen Alarm- und/oder Warninformation einzuleiten, welche aufgrund einer Ausführung der sicherheitskritischen Funktion ausgesendet worden ist.

3. Steuereinheit nach einem der vorhergehenden Ansprüche, **dadurch gekennzeichnet, dass** die Integritätsüberwachungsdaten während des Betriebs des Systems aufgezeichnet und/oder gespeichert werden.

4. Steuereinheit nach einem der vorhergehenden Ansprüche, **dadurch gekennzeichnet, dass** die Integritätsüberwachungsdaten zudem zumindest eine Eigenschaft des Funksignals der Funkübertragung und/oder einen digitalisierten Ausschnitt des Funksignals beschreiben.

5. Steuereinheit nach einem der vorhergehenden Ansprüche, **dadurch gekennzeichnet, dass** die Integritätsüberwachungsdaten zudem Systemsteuerungsbefehle umfassen.

6. Steuereinheit nach einem der vorhergehenden Ansprüche, **dadurch gekennzeichnet, dass** das Aufzeichnen und/oder Speichern der Integritätsüberwachungsdaten mittels einer kryptographischen Prüfsumme manipulationsgeschützt ist.

7. Steuereinheit nach einem der vorhergehenden Ansprüche, **dadurch gekennzeichnet, dass** das Aufzeichnen und/oder Speichern der Integritätsüberwachungsdaten mittels einer Attestierung manipulationsgeschützbar ist.

8. Steuereinheit nach einem der vorhergehenden Ansprüche, **dadurch gekennzeichnet, dass** die Steuereinheit als im System lokal angeordnete Applikation, als außerhalb des Systems angeordnete Cloud- und/oder Serverdienst (EC) ausgestaltet ist.

9. Steuereinheit nach einem der vorhergehenden Ansprüche, **dadurch gekennzeichnet, dass** zum manipulationsgeschützten Erfassen der Integritätsüberwachungsdaten diese als Transaktion in eine Blockchain-Datenstruktur eingestellt sind.

10. Steuereinheit nach einem der vorhergehenden Ansprüche, **dadurch gekennzeichnet, dass** zum manipulationsgeschützten Aufzeichnen und/oder Speichern der Integritätsüberwachungsdaten diese in eine kryptographisch gesicherte Log-Datei geschrieben oder schreibbar sind.

11. Verfahren umfassend folgende Schritte:
- Manipulationsgeschütztes Erfassen von betriebssicherheitsrelevanten Integritätsüberwachungsdaten eines mit einer betriebssicherheitskritischen Funktion ausgestatteten Systems (ID1 bis ID5), das per Funkübertragung (5G) an ein Kommunikationsnetzwerk angebunden ist oder wird, wobei die Integritätsüberwachungsdaten eine Integritätsüberwachung des Systems und/oder Fremdzugriffe auf die Funkübertragung beschreiben, und
- manipulationsgeschütztes Aufzeichnen und/oder Speichern der Integritätsüberwachungsdaten zur Auswertung derselben im Falle eines Einsatz der betriebssicherheitsrelevanten Funktion.

12. Verfahren nach dem vorhergehenden Anspruch, **dadurch gekennzeichnet, dass** die aufgezeichneten und/oder gespeicherten Integritätsüberwachungsdaten ausgegeben werden, um eine Auswertung derselben basierend auf einer erhaltenen Alarm- und/oder Warninformation einzuleiten, welche aufgrund einer Ausführung der sicherheitskritischen Funktion ausgesendet worden ist.

13. Verfahren nach einem der vorhergehenden Verfahrensansprüche, **dadurch gekennzeichnet, dass** die Integritätsüberwachungsdaten während des Betriebs des Systems aufgezeichnet und/oder gespeichert werden.

14. Verfahren nach einem der vorhergehenden Verfahrensansprüche, **dadurch gekennzeichnet, dass** die Integritätsüberwachungsdaten zudem zumindest eine Eigenschaft des Funksignals der Funkübertragung und/oder einen digitalisierten Ausschnitt des Funksignals beschreiben.

15. Verfahren nach einem der vorhergehenden Verfahrensansprüche, **dadurch gekennzeichnet, dass** die Integritätsüberwachungsdaten zudem Systemsteuerungsbefehle umfassen.

16. Verfahren nach einem der vorhergehenden Verfahrensansprüche, **dadurch gekennzeichnet, dass** das Aufzeichnen und/oder Speichern der Integritätsüberwachungsdaten mittels einer kryptographischen Prüfsumme manipulationsgeschützt ist oder wird.

17. Verfahren nach einem der vorhergehenden Verfahrensansprüche, **dadurch gekennzeichnet, dass** das Aufzeichnen und/oder Speichern der Integritätsüberwachungsdaten mittels einer Attestierung manipulationsgeschützt ist oder wird.

18. Verfahren nach einem der vorhergehenden Verfahrensansprüche, **dadurch gekennzeichnet, dass** die Steuereinheit als im System lokal angeordnete Applikation, als außerhalb des Systems angeordnete Cloud- und/oder Serverdienst (EC) ausgestaltet ist.

19. Verfahren nach einem der vorhergehenden Verfahrensansprüche, **dadurch gekennzeichnet, dass** zum manipulationsgeschützten Erfassen der Integritätsüberwachungsdaten diese als Transaktion in eine Blockchain-Datenstruktur eingestellt werden.

20. Verfahren nach einem der vorhergehenden Verfahrensansprüche, **dadurch gekennzeichnet, dass** zum manipulationsgeschützten Aufzeichnen und/oder Speichern der Integritätsüberwachungsdaten diese in eine kryptographisch gesicherte Log-Datei geschrieben werden.

21. Computerprogramm umfassend Programm-Code, der von mindestens einem Prozessor (P) ausgeführt werden kann und der bewirkt, dass der mindestens eine Prozessor das Verfahren nach einem der vorhergehenden Verfahrensansprüchen ausführt.
